(19) Europäisches Patentamt
European Patent Office
Office européen des brevets

(11) **EP 1 608 999 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(21) Anmeldenummer: 04711360.0

(22) Anmeldetag: **16.02.2004**

(51) Int Cl.:
*G01S 13/02* *(2006.01)*       *G01S 13/93* *(2006.01)*

(86) Internationale Anmeldenummer:
**PCT/EP2004/001440**

(87) Internationale Veröffentlichungsnummer:
**WO 2004/088353 (14.10.2004 Gazette 2004/42)**

(54) **RADAR MIT EINEM DURCH EINEN AUSWERTUNGSOSZILLATOR QUASIPHASENKOHÄRENT ANREGBAREN SENDEOSZILLATOR**

RADAR COMPRISING A TRANSMITTING OSCILLATOR THAT CAN BE EXCITED BY AN EVALUATION OSCILLATOR IN A QUASI-PHASE COHERENT MANNER

RADAR COMPRENANT UN OSCILLATEUR D'EMISSION POUVANT ETRE EXCITE PAR UN OSCILLATEUR D'EVALUATION EN MODE QUASI-PHASE COHERENT

(84) Benannte Vertragsstaaten:
**AT BE BG CH CY CZ DE DK EE ES FI FR GB GR HU IE IT LI LU MC NL PT RO SE SI SK TR**

(30) Priorität: **31.03.2003 DE 10314558**

(43) Veröffentlichungstag der Anmeldung:
**28.12.2005 Patentblatt 2005/52**

(73) Patentinhaber:
• **SIEMENS AKTIENGESELLSCHAFT**
  **80333 München (DE)**
• **Nalezinski, Martin**
  **81541 München (DE)**

(72) Erfinder:
• **NALEZINSKI, Martin**
  **81541 München (DE)**
• **VOSSIEK, Martin**
  **31139 Hildesheim (DE)**

(56) Entgegenhaltungen:
**EP-A- 0 795 761          EP-A- 1 051 639**
**DE-A- 10 032 822**

**Beschreibung**

Radarsensoren für den Einsatz in Industrie und Verkehr sind in vielfältiger Form bekannt. Ausgeführt werden Radarsensoren als Puls-Radare, wie in US 3,117,317, US 4,132,991 und US 4,521,778 dargestellt, oder als so genannte Dauerstrich- oder CW-Radare (CW = continuous wave). Pulsradare bestimmen die Entfernung zwischen einem Objekt und dem Radar dadurch, dass die Laufzeit eines kurzen Pulses vom Radar zum Objekt und zurück gemessen wird. CW-Radare hingegen werten den Phasenunterschied zwischen dem gesendeten und dem reflektiert empfangenen Signal aus. Zur Bestimmung eines zuverlässigen Messwertes in einem größeren Messbereich werden CW-Radare in aller Regel über einen möglichst großen Frequenzbereich durchgestimmt. Das bekannteste und am weitesten verbreitete Radar diesen Typs ist das FMCW-Radar (FMCW = frequency modulated continuous wave).

Vor allem in Freiraumanwendungen ist es wünschenswert, die Sendeleistung eines Radarsensors gezielt absenken zu können, da es die Funk-Zulassungsvorschriften häufig erfordern, dass die abgestrahlte Sendeleistung und insbesondere die mit dem Sendevorgang verbundenen Störaussendungen unterhalb eines gewissen Pegels bleiben.

In EP 1 051 639 B1 wird ein gepulstes FMCW-Radar vorgestellt, dass sich dadurch auszeichnet, dass es durch Wahl einer Pulsfolge, mit der das Sendesignal getaktet wird, in seiner Hochfrequenz-Ausgangsleistung beeinflussbar ist.

Eine Schaltungsvariante nach dem Stand der Technik als Verbesserung des in EP 1 051 639 B1 offenbarten Radars zeigt Figur 1. Das hier dargestellte Radar umfasst wie ein gewöhnliches FMCW-Radar einen spannungsgesteuerten Oszillator VCO, einen Richtkoppler RK, eine Antenne ANT und einen Mischer MIX1. Ebenso, wie in EP 1 051 639 B1 dargestellt, umfasst das Radar ferner eine Taktlogik CLK, mit der das Sendesignal über einen Schalter SWTX periodisch ein- und ausgeschaltet wird. Schließt man beispielsweise den Schalter mit einer Wiederholrate von 1 MHz für jeweils für nur 1 ns, so sinkt die mittlere Sendeleistung um 60 dB gegenüber dem Dauerbetrieb ab. Durch Änderung des Puls- zu Pausenverhältnis können in weitem Rahmen auch beliebige andere Werte eingestellt werden.

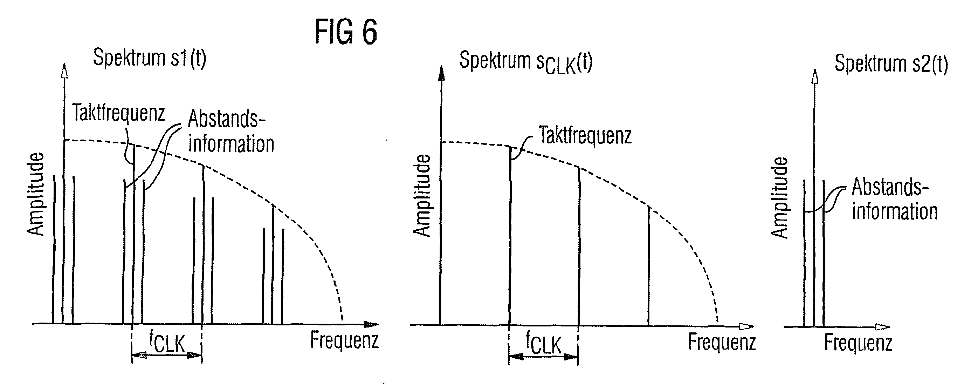

Darüber hinaus weist die Schaltungsvariante einen zweiten Mischer MIX2 auf. Das über die Antenne ANT empfangene Signal ist mit der durch die im Sendepfad befindliche Taktlogik CLK getastet bzw. amplitudenmoduliert und besitzt das in Figur 6 (links) dargestellte Spektrum. Durch das Mischen des Empfangssignals mit $s_{CLK}(t)$ in MIX2, wird genau diese Modulation beseitigt bzw. das Messsignal s1(t) in das Signal s2(t) im Basisband, also in den Frequenzbereich um die Frequenz 0, umgesetzt.

Nach der Filterung mit dem Tiefpassfilter TPNF, das höhere Mischprodukte unterdrückt, ergibt sich somit ein Messsignal wie bei gewöhnlichen, nicht getaktet betriebenen, FMCW-Radaren.

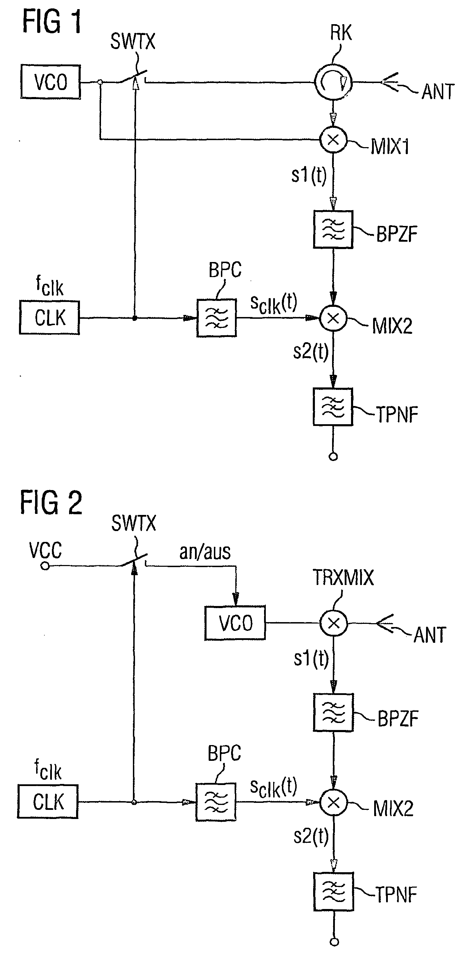

Vorteilhaft ist bei einem Konzept nach Figur 1, dass die Taktrate der Taktlogik CLK in weiten Bereichen variiert werden kann. Die Breite des Variationsbereichs wird nur durch die Bandbreite von BPZF und BPC begrenzt. Somit kann auch die Höhe der mittleren Sendeleistung in einem weiten Bereich eingestellt werden, ohne dass das Messsignal in der Form bzw. in seiner Frequenzlage geändert wird. Lediglich das Signalzu-Rausch-Verhältnis des Messsignals ändert sich.

Nachteilig bei der Ausführung nach Figur 1 ist, dass hier der Schalter SWTX ein Hochfrequenzschalter sein muss.

Hochfrequenzschalter sind zum einen sehr aufwändig, zum anderen ist es nur schwer möglich einen hohen Schaltkontrast zu realisieren. Folglich wird mit der Schaltung nach Figur 1 die Leistungsabsenkung praktisch oft nur im eingeschränkten Rahmen gelingen.

Eine bzgl. des Schaltungsaufwandes deutlich vereinfachte Variante nach dem Stand der Technik, die dieses Problem löst, zeigt Figur 2. Bei dieser wird durch den Schalter SWTX der Oszillator selbst ein- und ausgeschaltet wird. Dies kann z.B. durch Weg- und Zuschalten der Versorgungsspannungsspannung erfolgen. Schwingt der Oszillator nicht, erzeugt er keine Signalleistung und der Schaltkontrast wird maximal. Ferner wird zur Vereinfachung der Schaltung anstatt des Richtkopplers ein so genannter Transmissionsmischer TRMIX verwendet.

Nachteilig ist an der Schaltung nach Figur 2 jedoch, dass entweder der maximale Messbereich oder die minimal ausgesendete mittlere Leistung oder die minimale Messgeschwindigkeit des Radars durch diese Art zu schalten beschränkt wird. Einerseits muss nämlich der Schalter SWTX hier auf jeden Fall so lange geschlossen bleiben, bis alle Signalanteile, also auch die aus der maximal zu erwartenden bzw. der maximal vorgegebenen Entfernung, wieder empfangen worden sind. Die Pulsdauer, also die Zeit während der der Schalter geschlossen bzw. der Oszillator eingeschaltet ist, sollte also deutlich größer sein als die maximale Signallaufzeit. Bei einem Messbereich von beispielsweise 15 m wäre die maximale Signallaufzeit 70 ns und somit sind hier sinnvolle Messwerte erst ab Pulsdauern von mehr als 100 ns zu erwarten. Um andererseits eine gewünschte Absenkung der mittleren Leistung durch das Tastverhältnis zu erzielen, sind entsprechend lange Pausen zwischen den Einschaltmomenten zu gewährleisten, die unter Umständen dem Abtasttheorem widersprechen. Jede Einschaltperiode des Radars entspricht nämlich der Erzeugung eines Abtastwertes, der dem Abtasten des Messsignals eines kontinuierlich betriebenen FMCW-Radars entspricht. Damit können bei zu großen Pausen keine hohen Frequenzen ausgewertet werden. Damit darf die Entfernung eines Messobjekts, zu der die Messsignalfrequenz proportional ist, bei vorgegebener Durchstimmrate der Frequenzrampe einen bestimmten Abstand nicht überschreiten. Soll der Messbereich dennoch über dieses Maß hinaus vergrößert werden, muss die Durchstimmrate verringert und damit die Messdauer einer Messung vergrößert werden.

Aufgabe der vorliegenden Erfindung ist es, Systeme aufzuzeigen, die die Aufgabe der beschriebenen Vorrichtungen in anderer und verbesserter Form erfüllen und deren Abstrahl- und Betriebsverhalten sich zudem besonders vorteilhaft steuern lassen.

Diese Aufgabe wird durch die in den unabhängigen Ansprüchen angegebenen Erfindungen gelöst. Vorteilhafte Ausgestaltungen ergeben sich aus den abhängigen Ansprüchen.

Dementsprechend verfügt eine Anordnung oder Vorrichtung über Sendemittel zum Erzeugen und Senden eines elektromagnetischen Signals, und über Empfangsmittel zum Empfangen einer Reflexion des gesendeten elektromagnetischen Signals. Dabei weisen die Sendemittel einen Sendeoszillator zum Erzeugen des elektromagnetischen Signals auf und die Empfangsmittel weisen einen Auswertungsoszillator zum Erzeugen eines elektromagnetischen Auswertungssignals auf, das mit der empfangenen Reflexion des gesendeten elektromagnetischen Signals zu vergleichen, insbesondere zu mischen ist. Der Sendeoszillator und der Auswertungsoszillator sind dabei so geschaltet und/oder angeordnet, dass der Sendeoszillator durch elektromagnetische Wechselwirkung mit dem oszillierenden Auswertungsoszillator quasiphasenkohärent anregbar bzw. quasiphasenkohärent verkoppelt ist.

Dadurch braucht der Sendeoszillator nur bei Bedarf eingeschaltet zu werden, wodurch Energieverbrauch und mittlere Sendeleistung wie gewünscht reduziert werden. Andererseits ist durch die quasiphasenkohärente Anregung bzw. Verkopplung aber auch immer eine hinreichende Phasenkohärenz zwischen Sendeoszillator und Auswertungsoszillator bzw. dem vom Sendeoszillator generierten elektromagnetischen Signal sowie seiner Reflexion und dem vom Auswertungsoszillator generierten Auswertungssignal gewährleistet.

Alternativ oder ergänzend kann zu anderen Zwecken auch der Auswertungsoszillator durch den Sendeoszillator quasiphasenkohärent anregbar sein.

Quasiphasenkohärent heißt dabei, dass durch die erfindungsgemäße Anordnungen dafür Sorge getragen wird, dass die Phasendifferenz zwischen den Signalen von Sendeoszillator und Auswertungsoszillator klein ist, aber nicht zwangsweise verschwindet, wie bei einer echter Kohärenz. Der Begriff der kleinen Phasendifferenz ist dabei in Bezug zur beabsichtigten Kommunikations- bzw. Messaufgabe zu sehen. Als Grenze für eine kleine Phasenabweichung wird zum Beispiel häufig der Wert $\pi/10$, also. ca. 20° verwendet. Solche Signale mit nur kleinen Phasenabweichungen werden im Folgenden als quasiphasenkohärent bezeichnet und die Zeitspanne, in der diese Kohärenz besteht, als Kohärenzzeitlänge.

Eine Grundidee zur Realisierung der Quasiphasenkohärenz ist in DE 100 32 822 A1 beschrieben und besteht darin, dass ein Oszillator sich nach dem Einschalten zunächst in einem labilen Gleichgewicht befindet, und durch eine wie auch immer geartete Fremdenergiezufuhr erst zum Schwingen angeregt werden muss. Erst nach diesem initialen Anstoßen klingt über die Rückkopplung eine Schwingung an. Üblicherweise liefert zum Beispiel das thermische Rauschen diesen initialen Anstoß. Das heißt, dass ein Oszillator mit einer zufälligen Phase und Amplitude anschwingt und bei der durch seinen Resonanzkreis vorgegebenen Frequenz schwingt. Wird in den Oszillator beim Einschalten jedoch ein externes Anregungssignal injiziert, so schwingt der Oszillator nicht zufällig, sondern deterministisch zu der Phase des injizierten Signals an. Solange die Phasendifferenz zwischen dem injizierten Signal und dem Oszillatorsignal weniger als ca. 20° beträgt, sind die beiden Signale quasiphasenkohärent.

Die Eigenschaft, dass ein Oszillator in der Einschaltphase versucht dem Phasenverlauf eines stimulierenden Signals zu folgen, ist eine grundlegenden physikalische Eigenschaft eines jeden Oszillators, die hier jedoch erfindungsgemäß dazu genutzt wird zwei Oszillatoren quasikohärent miteinander zu verkoppeln bzw. den Sendeoszillator quasikohärent zum Auswerteoszillator bzw. alternativ auch den Auswerteoszillator quasikohärent zum Sendeoszillator zu betreiben.

Für die quasiphasenkohärente Anregbarkeit sind die Oszillatoren so elektromagnetisch miteinander gekoppelt, dass der Sendeoszillator durch den Auswertungsoszillator und/oder der Auswertungsoszillator durch den Sendeoszillator quasiphasenkohärent anregbar ist. Dies kann dadurch der Fall sein, dass die Oszillatoren durch Leitungsmittel miteinander verbunden sind. Andererseits reicht in der Regel das Übersprechen von einem Oszillator zum anderen, wenn die Oszillatoren nah beieinander angeordnet und insbesondere nicht gegeneinander abgeschirmt sind.

Vorzugsweise wird der quasiphasenkohärent anregbare Oszillator immer wieder in den quasiphasenkohärent anregbaren Zustand versetzt, indem er durch Mittel zum zyklischen Schalten des quasiphasenkohärent anregbaren Oszillators mit einer Taktrate aus- und wieder angeschaltet wird. Allgemein sollte die Taktfolge so gewählt sein, dass die Einschaltdauer des quasiphasenkohärent anregbaren Oszillators kürzer oder gleich der Zeitdauer ist, in der die Quasiphasenkohärenz zwischen dem quasiphasenkohärent anregbaren Oszillator und dem quasiphasenkohärent anregenden Oszillator besteht. Die Wiederholrate des Taktes, mit dem der quasiphasenkohärent anregbare Oszillator geschaltet wird, ist insbesondere deutlich größer als die maximal zu erwartenden Frequenz des Messsignals ist, insbesondere mehr als fünfmal so groß.

Die Einschaltdauer des quasiphasenkohärent anregbaren Oszillators ist dabei in der Größenordnung des Kehrwerts oder kleiner als der Kehrwert der maximal zu erwartenden Differenz zwischen den Frequenzen der beiden quasiphasenkohärent verkoppelten Oszillatoren im eingeschwungenen Zustand.

Der Sendeoszillator und/oder der Auswertungsoszillator kann in seiner Frequenz veränderbar sein. Dann kann die Anordnung als frequenzmoduliertes Pulsradar bzw. gepulstes FMCW-Radar betrieben werden.

Eine ganz besonders für den Nahbereich geeignete Variante ergibt sich, wenn der eine Oszillator in seiner Frequenz veränderbar ist, während der jeweils andere Oszillator ein Festfrequenzoszillator ist.

Die Anordnung ist insbesondere eine Anordnung zur Abstandsmessung und/oder ein Radar, insbesondere ein im Frequenzbereich durchstimmbarer Radar und/oder ein in zwei Schaltzuständen zwischen einem Nahbereichsradar und einem Fernbereichsradar umschaltbarer Radar.

In einem Messverfahren, insbesondere zur Abstandsmessung, wird

- ein Sendeoszillator durch einen Auswertungsoszillator und/oder ein Auswertungsoszillator durch einen Sendeoszillator quasiphasenkohärent angeregt,
- mit einem Sendeoszillator ein zu sendendes Signal erzeugt,
- das Signal gesendet,
- eine Reflexion des gesendeten Signals empfangen,
- mit dem Auswertungsoszillator ein Auswertungssignal erzeugt.

Die Reflexion des gesendeten Signals wird dann, insbesondere unter Berücksichtigung des Auswertungssignals, in der Messung ausgewertet. Das Auswertungssignal wird dabei vorzugsweise mit der Reflexion des gesendeten Signals gemischt.

Weiter bevorzugt wird der Sendeoszillator durch den Auswertungsoszillator und/oder der Auswertungsoszillator durch den Sendeoszillator zyklisch immer wieder quasiphasenkohärent angeregt, wozu der quasiphasenkohärent angeregte Oszillator mit einer Taktrate beispielsweise durch Aus- und Einschalten aus- und wieder quasiphasenkohärent anregbar geschaltet wird.

Andere vorteilhafte Ausgestaltungen des Verfahrens ergeben sich analog zu den vorteilhaften Ausgestaltungen der Anordnung.

Weitere Vorteile und Merkmale der Erfindung ergeben sich aus der Beschreibung von Ausführungsbeispielen. Dabei zeigt:

Figur 1    Ein Radar nach dem Stand der Technik;
Figur 2    ein zweites Radar nach dem Stand der Technik;
Figur 3    eine Anordnung mit Sendemitteln und Empfangsmitteln;
Figur 4    eine alternative Anordnung mit Sendemitteln und Empfangsmitteln;
Figur 5    eine weitere Anordnung mit Sendemitteln und Empfangsmitteln;
Figur 6    Spektren eines Messsignals an verschiedenen Stufen des Messsignalzweigs;
Figur 7    noch eine weitere Anordnung mit Sendemitteln und Empfangsmitteln;
Figur 8    einen Demodulator;
Figur 9    einen alternativen Demodulator;
Figur 10   schematische Messspektren der Anordnung nach Figur 7 und eines herkömmlichen Abstandsradars im Vergleich;
Figur 11   Messergebnisse der Anordnung nach Figur 7 und eines herkömmlichen Abstandsradars im Vergleich.
Figur 12   Ausführungsformen eines Umsetzers
Figur 13   Varianten der verkoppelten Signalquellen.

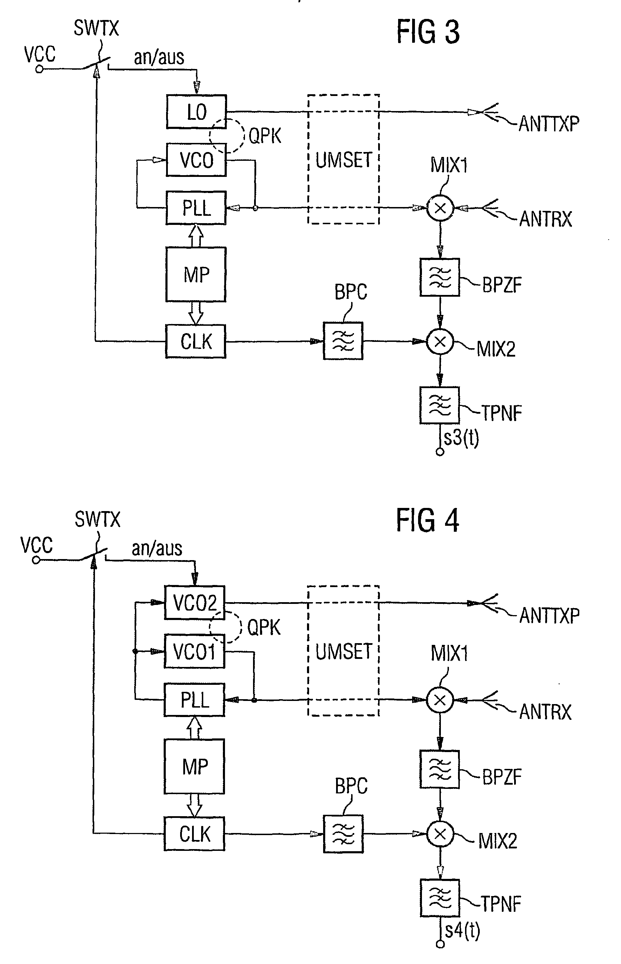

Die für Figur 2 aufgeführten Probleme löst die Schaltung nach Figur 3. Diese Schaltung enthält neben dem nunmehr als Auswertungsoszillator dienenden Oszillator VCO einen weiteren Oszillator, den Sendeoszillator LO, der zur Erzeugung des Sendesignals dient. Entscheidend ist, dass der Auswertungsoszillator VCO und der Sendeoszillator LO über die Kopplung QPK quasiphasenstarr oder quasiphasenkohärent miteinander verkoppelt sind. Schaltet man den Sendeoszillator LO zyklisch ein, während das Signal von VCO auf diesen überkoppelt, so schwingt der Sendeoszillator LO immer wieder mit einer durch den Auswertungsoszillator VCO vorgegebenen Phase an.

Zur Gewährleistung dieser Verkopplung QPK kann eine lose mit beiden Oszillatoren verkoppelte Verbindungsleitung vorgesehen werden. In aller Regel ist es aber aufgrund von stets vorhandener Abstrahlung von Oszillatorleistung nicht notwendig, spezielle schaltungstechnische Vorrichtungen vorzusehen um die Oszillatoren miteinander zu verkoppeln, sofern die Oszillatoren gegeneinander unabgeschirmt, also z.B. ohne jeweils eigene elektrisch geschlossenen metallische Deckel ausgeführt sind. Eine Überkopplung vom Auswertungsoszillator VCO auf den Sendeoszillator LO geschieht natürlich ebenso über die Masse- oder Versorgungsleitungen. Auch bei der Auswahl der Oszillatoren sind keine speziellen Anforderungen zu beachten. Es sind übliche Hochfrequenzoszillatoren einsetzbar, wobei jedoch einer der beiden Oszillatoren erfindungsgemäß mit einer geeigneten Taktfolge zyklisch ein- und ausgeschaltet werden muss, um so wie beschrieben die quasiphasenkohärente Verkopplung der beiden Oszillatoren zu gewährleisten. Sorge ist vorzugsweise dafür zu tragen, dass nicht von außen ein drittes noch deutlich stärkeres Signal auf den geschalteten Sendeoszillator LO einwirkt und dieser kohärent zu diesem dritten Signal statt zu dem vom Auswertungsoszillator VCO anschwingt.

Sind die Frequenzen der Oszillatoren LO und VCO gleich, so ergibt sich s3(t) zu einer Gleichspannung, die die definitionsgemäß geringe Differenzphase zwischen den beiden quasikohärenten Ausgangssignalen repräsentiert. Schaltet man den Sendeoszillator LO zyklisch für jeweils eine sehr kurze Zeit ein, bleibt die Quasiphasenkohärenz zwischen den beiden Oszillatoren über alle Einschaltperioden bestehen. Das heißt, das Signal s3(t) am Mischer MIX2 ist nahezu identisch mit dem Signal, das sich ergeben würde, wenn man das Signal vom Oszillator mit einem Schalter im selben Takt austasten würde.

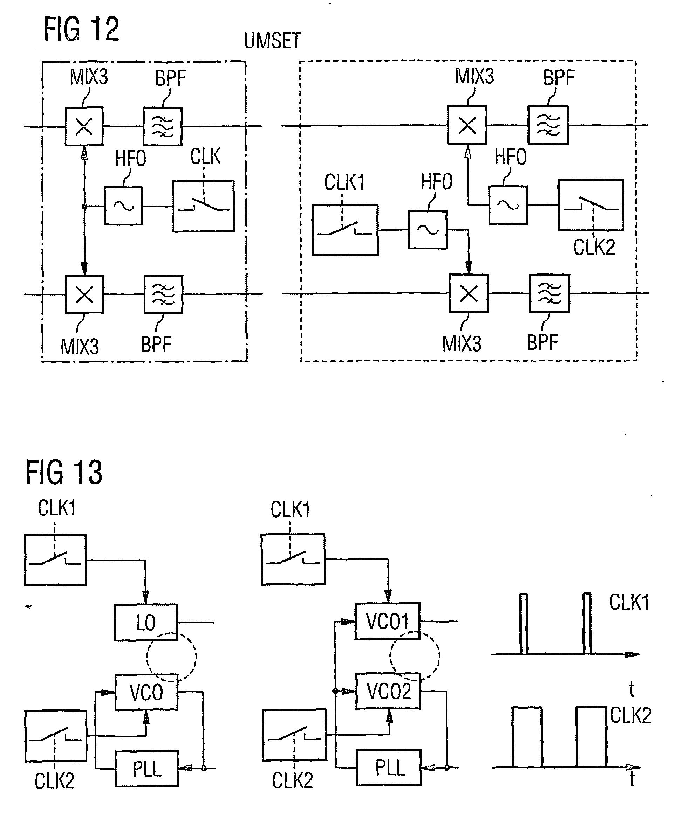

Neben dem Sendeoszillator LO kann, wie in Figur 13 dargestellt, zusätzlich auch der Auswertungsoszillator VCO geschaltet werden. Dabei muss dessen Einschwingen in dem Moment, in dem der Sendeoszillator LO eingeschaltet wird weitgehend abgeschlossen sein, und er darf erst wieder abgeschaltet werden, wenn die Reflexionen aus dem maximal zu erfassenden Abstandsbereich am Sensor eingetroffen sind. Durch das Schalten des Auswertungsoszillators VCO wird die Phasenbedingungen zwischen dem Sende- und Empfangssignal gegenüber einer Messung mit dauerhaft eingeschaltetem Auswertungsoszillator VCO nicht verändert. Aus Gründen des Energieverbrauchs ist diese Betriebsart dagegen vorteilhaft.

Es ist bei der Anordnung in Figur 3 nicht relevant, dass die Sendeantenne ANTTXP und die Empfangsantenne ANTRX getrennt ausgeführt sind. Ebenso könnte eine einzelne Sende-Empfangsantenne über einen Richtkoppler oder Zirkulator gespeist werden. Auch nicht entscheidend ist die Verwendung eines PLL-Synthesizers bzw. einer PLL zur Steuerung des VCO (PLL = Phase lock loop). Es soll hier lediglich die Möglichkeit der kompletten Steuerung des Sensors durch einen Mikroprozessor MP angedeutet werden.

Wenn der Oszillator LO ein Festfrequenzoszillator und VCO ein Festfrequenzoszillator sind, ergibt sich zum einen ein konstanter Frequenzversatz und eine sin(x)/x Amplitudengewichtung des Messsignals s3(t). Beide Effekte können jedoch rechnerisch einfach in der Messsignalauswertung berücksichtigt werden.

Die gleichen Messsignale wie die Schaltung aus Figur 1 liefert die Schaltung nach Figur 4. Hier ist der frequenzvariable Sendeoszillator VCO2 möglichst identisch zum frequenzvariablen Auswertungsoszillator VCO1 ausgeführt und die beiden Steuereingänge der Oszillatoren sind miteinander verbunden. Ebenso sind, wie in Figur 3, Sendeoszillator VCO1 und Auswertungsoszillator VCO2 über eine quasiphasenstarre bzw. quasiphasenkohärente Kopplung QPK miteinander verkoppelt.

Sind Sendeoszillator VCO1 und Auswertungsoszillator VCO2 gleicher Bauform, so stimmen die Frequenzen der beiden Oszillatoren VCO2 und VCO1 über den gesamten Durchstimmbereich, d.h. zu jedem Einschaltzeitpunkt, praktisch genau überein. Da nun beide Oszillatoren über den gesamten Durchstimmbereich quasikohärent mit der gleichen Frequenz schwingen, ergibt sich ein Signal s4(t) wie bei einem kontinuierlich betriebenen FMCW-Radar, wobei lediglich der Signal/Rauschabstand verringert ist.

Auch hier ist es wiederum möglich gemäß Figur 13 den Auswerteoszillator ebenfalls schaltbar auszuführen, um eine niedrigere Energieaufnahme des Sensors zu erzielen.

Eine geeignete Parametrierung könnte wie folgt aussehen: Die Mittenfrequenz der Oszillatoren könnte z.B. in der Nähe von 6 GHz oder 26 GHz liegen. Der Oszillator VCO1 wird z.B. innerhalb von 1-10 ms über eine Bandbreite von etwa 1 GHz (oder auch mehr) verstimmt. Die Taktrate von CLK kann dann z.B. vorzugsweise im Bereich von 1-10 MHz liegen. Die Pulsdauer liegt vorzugsweise im Bereich von 100 ps bis 10 ns.

Des Weiteren bleibt die erfindungsgemäße Funktion des Sensors nach Figur 3 oder 4 bestehen, wenn, wie gestrichelt gekennzeichnet, ein Frequenzumsetzer UMSET mit Ausführungsformen gemäß Figur 12, in den Sensor eingefügt wird. Der Umsetzer besitzt, wie in Figur 12 links dargestellt, einen Festfrequenzoszillator HFO, je einen Mischer und gegebenenfalls ein Bandpassfilter im Sende- und Empfangszweig. Das Bandpassfilter wird gegebenenfalls aus zulassungstechnischen Gründen zur Unterdrückung unerwünschter Mischprodukte benötigt. Der Festfrequenzoszillator HFO kann wiederum aus energetischen Gründen schaltbar ausgeführt sein, wobei der Oszillator weitgehend eingeschwungen sein muss, wenn die Oszillatoren LO bzw. VCO1 eingeschaltet werden und darf erst ausgeschaltet werden, wenn die Reflexionen aus dem maximal zu erfassenden Abstandsbereich am Sensor eingetroffen sind. Alternativ kann die Umsetzung auch, wie in Figur 12 rechts dargestellt, mit zwei getrennten Oszillatoren HFO1 und HFO2 erfolgen, die miteinander quasikohärent verkoppelt sind. Dabei kann die Anschaltzeit wiederum im Sinne der Kohärenz und des Energieverbrauchs optimiert werden.

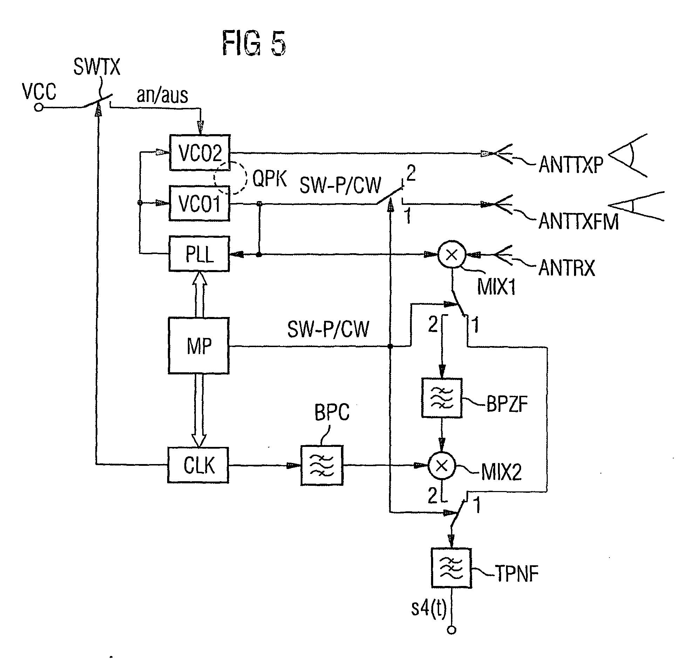

Eine weitergehende Ausgestaltung der Schaltung als Multifunktionsradar zeigt Figur 5. Beispielsweise über ein Schaltsignal SW-P/CW vom Mikroprozessor MP ist es hier möglich, das Radar in zwei Betriebszustände zu versetzen. Im Schaltzustand 1 arbeitet das Radar als gewöhnliches FMCW Radar mit voller Ausgangsleistung und dementsprechend großer Reichweite und großer Empfindlichkeit. In dieser Betriebsart ist über die Mikroprozessor-Steuerung dafür zu sorgen dass:

a) der Schalter SWTX offen ist, also der Oszillator VCO2 kein Signal erzeugt, und b) dass der Oszillator VCO1 nur Signale im Frequenzbereich erzeugt die konform zu den Zulassungsbestimmungen sind, also z.B. gemäß FCC 15 im ISM Band von 24 GHz bis 24.25 GHz mit einer abgestrahlten Feldstärke < 250 mV/m.

Im Schaltzustand 2 arbeitet der Sensor als Ultrawideband-Pulsed-FM-Radar nach den erweiterten Zulassungsbestimmungen FCC Part 15 "Ultra-Wideband Transmission System". Vorzugsweise werden für die unterschiedlichen Betriebsarten auch unterschiedliche Antennen verwendet. Im Ausführungsbeispiel weist die Antennen ANTTXP einen deutlich größeren Öffnungswinkel als die Antenne ANTTXFM auf. Dies ist deswegen sinnvoll, da im Betriebszustand 2 sich das System vorzugsweise als Nahdistanzradar eignet im Schaltzustand 1 jedoch vorzugsweise dazu, um größere Entfernungen abzudecken. Die Antenne ANTRX kann auch zwischen diesen beiden Richtverhalten umschaltbar ausgeführt sein oder der Einfachheit halber so ausgeführt sein, wie die Antenne mit dem größeren Öffnungswinkel (also wie ANTTXP). Die Antennen können getrennt, gemeinsam bzw. umschaltbar ausgeführt werden, es können in Gruppenantennen Teilgruppen zu- oder weggeschaltet werden. Wie derartige Antennenlösungen und Schalter zu realisieren sind ist dem Experten üblicherweise bekannt und daher nicht Gegenstand der Ausführungen.

Ganz hervorragend eignet sich das Radar nach Figur 5 als Kfz-Radar. Im Betriebszustand 2 deckt es den Nahbereich ab beispielsweise zum Zweck einer Einparkhilfe. Im Betriebszustand 1 kann der Radarsensor zwar bei verschlechterter Auflösung signifikant weiter z.B. bis typischerweise 100 m messen und daher gut zum Zweck einer Geschwindigkeitsregelung und Kollisionsvermeidung (z.B. als so genanntes Stop & Go Radar) verwendet werden. Die Umschaltung der Betriebszustände könnte z.B. an die Gangschaltung gekoppelt sein; Rückwärts- und Erster- Gang bewirkt Betriebszustand 2, alle anderen Gänge Betriebszustand 1. Ebenso wäre auch eine Kopplung an die Fahrgeschwindigkeit oder ein stetig wechselnder Betrieb denkbar.

Alle dargestellten Radare sind natürlich nicht auf bestimmte Applikationen limitiert, sondern können in allen Gebieten eingesetzt werden, wo auch sonst Puls- oder CW-Radare zum Einsatz kommen.

Im Weiteren wird nun noch ein Verfahren zum Betrieb des Sensors nach Figur 3 und das Verfahren zur Auswertung von dessen Messsignalen dargestellt. Die Signale der übrigen Anordnungen können so wie zuvor im Text beschrieben bzw. wie bei normalen Radarsensoren üblich ausgewertet werden. Beim dem Radarsensor nach Figur 3 ergeben sich jedoch einige Besonderheiten die besonders vorteilhafte Möglichkeiten ergeben.

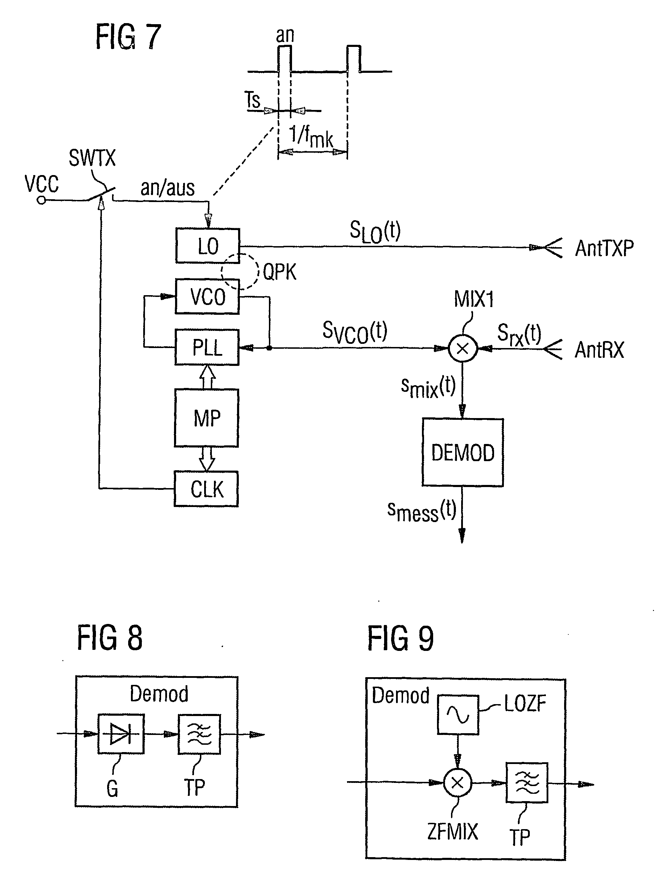

Den grundlegenden Aufbau des Sensors und die Bezeichnungen der Signale zeigt noch einmal Figur 7.

Die Funktion des vorteilhaften Verfahrens zur Entfernungsmessung lässt sich wie folgt herleiten: Als Signal des Oszillators VCO $s_{VCO}(t)$ wird zunächst ein monofrequentes Signal der Form

$$s_{VCO}(t) = \sin((\omega_c + \omega_{sw}) \cdot t + \phi_o)$$

angenommen, wobei $\omega_c$ die Mittenfrequenz, $\omega_{sw}$ eine zunächst feste Modulationsfrequenz, t die Zeit und $\phi_0$ einen beliebigen Phasenoffset darstellen. Wie oben dargestellt ist, wird der Sendeoszillator LO zyklisch ein- und ausgeschaltet. Die Frequenz, mit der der Oszillator LO angeschaltet bzw. ausgeschaltet wird, wird im Folgenden mit $f_{mk}$ bezeichnet, die Zeitdauer die der Oszillator jeweils eingeschaltet ist Ts.

Bei jedem Einschaltvorgang schwingt der Oszillator LO bei bevorzugter Anordnung exakt mit der aktuellen Phase von $s_{VCO}(t)$ jedoch auf seiner eigenen Schwingfrequenz $\omega_{LO}$ an. Wird der Oszillator z.B. zum Zeitpunkt $t = -\tau$ eingeschaltet, so schwingt er mit der Phase

$$\phi_i = \arg\{s_{VCO}(-\tau)\} = (\omega_c + \omega_{sw}) \cdot (-\tau) + \phi_o$$

an und das Oszillatorsignal $s_{LO}(t)$ entspricht demzufolge:

$$s_{LO}(t) = \sin(\omega_{LO} \cdot t - (\omega_c + \omega_{sw}) \cdot \tau + \phi_o) \, .$$

Dieses Signal wird vom Radargerät zum jeweiligen Reflektor gesendet, an diesem reflektiert und trifft um die Laufzeit $\tau$, mit $\tau = 2*dist/c$, mit dist als Entfernung zwischen Radar und Reflektor und c als Lichtgeschwindigkeit, verzögert beim Radargerät als Empfangssignal $s_{rx}(t) = s_{LO}(t-\tau)$ ein.

$$s_{rx}(t) = s_{LO}(t-\tau) = \sin(\omega_{LO} \cdot (t-\tau) - (\omega_c + \omega_{sw}) \cdot \tau + \phi_o)$$

Dieses Empfangssignal $s_{rx}(t)$ wird im Mischer mit dem aktuellen VCO-Signal $s_{VCO}(t)$ gemischt. Vernachlässigt man die hochfrequenten Mischprodukte und geht man vereinfacht davon aus, dass $\omega L_O = \omega_c$ ist, was bei geeigneter Wahl von $\omega_{sw}$ ohne Einschränkung der Allgemeinheit möglich ist, so ergibt sich für das Mischsignal $s_{mix}(t)$

$$s_{mix}(t) = \cos(t \cdot \omega_{sw} + \tau \cdot (\omega_c + \omega_{sw}))\ .$$

Im Folgenden wird nun davon ausgegangen, dass hinter dem Empfangsmischer MIX1 elektronische Komponenten/Mittel DEMOD vorgesehen sind, die dazu führen, dass die zeitliche Änderung der Spannung im Zeitintervall zwischen Ein- und Ausschalten, also von 0..Ts, im Sinne einer Mittelung zu eliminieren ist. Ein einfacher Hüllkurven-Demodulator nach dem Stand der Technik, bei dem das Signal gleichgerichtet und anschließend tiefpassgefiltert wird, würde z.B. in diesem Sinn arbeiten.

Eine Ausführung eines solchen einfachen Demodulators DEMOD mit einem Gleichrichter GR und dem Tiefpassfilter TP zeigt Figur 8.

Eine vorteilhaftere, in Figur 9 skizzierte Variante eines Demodulators DEMOD besteht darin, das Misch-Signal vorzugsweise mit einer Frequenz in der Nähe oder wie zu Figur 1 dargestellt gleich der zyklischen Frequenz $f_{mk}$ der Taktsteuerung CLK/Sw auf eine niedrige Frequenz herunterzumischen und anschließend mit einem Filter TP, das zumindest ein Tiefpass-Verhalten aufweist, zu filtern. Eine mögliche Ausführung dieser Variante weist einen Lokaloszillator LOZF, einen Mischer ZFMIX und einen Tiefpass TP auf. Im Prinzip entspricht nun das Gesamtsystem der Schaltung nach Figur 3. Wird die Frequenz des Lokaloszillators LOZF so ausgelegt, dass negative Mischfrequenzen entstehen können, so ist der Mischer ZFMIX als komplexwertiger, d.h. IQ-Mischer nach dem Stand der Technik (IQ: In-Phase und Quadratur-Phase, d.h. 90° phasenverschoben), auszulegen. Anstelle des Tiefpassfilters TP ist z.B. auch ein Bandpassfilter einsetzbar.

Im Zeitintervall 0 bis TS betrachtet, bewirken die dargestellten Mittel, dass quasi der Effektivwert der Spannung vom Mischsignal $s_{mix}(t)$ bestimmt wird. Dieser Effektivwert bildet dann im Folgenden das eigentliche Messsignal $s_{mess}(t)$. Konstante Amplitudenfaktoren werden bei der folgenden Darstellung vernachlässigt. Der Effektivwert von $s_{mix}(t)$ im Zeitintervall 0 bis TS, also $s_{mess}(t)$, berechnet sich wie folgt:

$$s_{mess}(t) = \int_0^{Ts} s_{mix}(t) = const. \cdot \frac{\cos\left(\omega_c \cdot \tau + \omega_{sw} \cdot \tau + \frac{1}{2} \cdot T_s \cdot \omega_{sw}\right) \cdot \sin\left(\frac{1}{2} T_s \cdot \omega_{sw}\right)}{\omega_{sw}}\ .$$

Da das Messsystem vorzugsweise frequenzmoduliert betrieben wird, wird nachfolgend der Fall betrachtet, bei dem die Modulationsfrequenz $\omega_{sw}$ zeitabhängig moduliert wird. Wird $\omega_{sw}$ während einer Zeitdauer von T linear von -B/2 bis +B/2 über die Bandbreite B verstimmt, gilt also

$$\omega_{sw} = \frac{2 \cdot \pi \cdot B \cdot t}{T}\ ,$$

so ergibt sich aus $s_{mess}(t)$ für das resultierende FMCW-Messsignal $s_{messfmcw}(t)$ :

$$s_{mess_{fmcw}}(t) = \cos\left(\omega_c \cdot \tau + \frac{2 \cdot \pi \cdot B \cdot t \cdot \tau}{T} + \frac{\pi \cdot B \cdot t \cdot T_s}{T}\right) \cdot \frac{\sin\left(\frac{\pi \cdot B \cdot t \cdot T_s}{T}\right)}{\left(\frac{\pi \cdot B \cdot t}{T}\right)}.$$

Wie zuvor dargestellt wurde, wird in der Herleitung mit dem Signal $s_{messfmcw}(t)$ lediglich das Signal während einer Einschaltperiode exakt wiedergegeben. Dadurch, dass dieses Signal zusätzlich durch die periodische Modulation im Transponder moduliert wird, entsteht eine Frequenzverschiebung von $s_{messfmcw}(t)$ um $f_{mk}$ bzw. zusätzlich Spektralkomponenten höherer Ordnung, wie auch schon in Figur 6 angedeutet wurde. Da dieser Effekt einer Amplitudenmodulation allgemein bekannt ist, wird im Folgenden nur eine einzelne Spektralkomponente exemplarisch betrachtet, bzw. das Signal $s_{messfmcw}(t)$, zunächst so, als sei es nicht zyklisch moduliert worden.

Dieses Messsignal $s_{messfmcw}(t)$ weist nun zwei entscheidende und sehr vorteilhafte Unterschiede zu Signalen von Standard FMCW-Radaren auf.

Zum einen ist die Messfrequenz $f_{mess}$, die der Ableitung der Phase des cos-Argumentes, also

$$f_{mess} = dist \cdot \frac{2 \cdot B}{T \cdot c} + \frac{B \cdot T_s}{2 \cdot T} = f_{beat} + \Delta b ,$$

entspricht, um den Frequenzanteil $\Delta b = B \cdot T_s / (2\,T)$ verschoben. Die Frequenz $f_{beat}$ entspricht der normalen FMCW-Messfrequenz und beinhaltet die eigentliche Messinformation, nämlich die Entfernung zwischen Radar und Reflektor mit $\tau = 2\,dist\,/c$. Zum anderen ist das Signal $s_{messfmcw}(t)$ mit einer trigonometrischen, insbesondere Si-Funktion (Si(x) = sin(x)/x) amplitudengewichtet. Die Fouriertransformierte, also das Spektrum dieses amplitudengewichteten Signals ergibt eine Rechteckfunktion, wobei die Breite $\Delta p$ des Rechtecks

$$\Delta p = \frac{B \cdot T_s}{T}$$

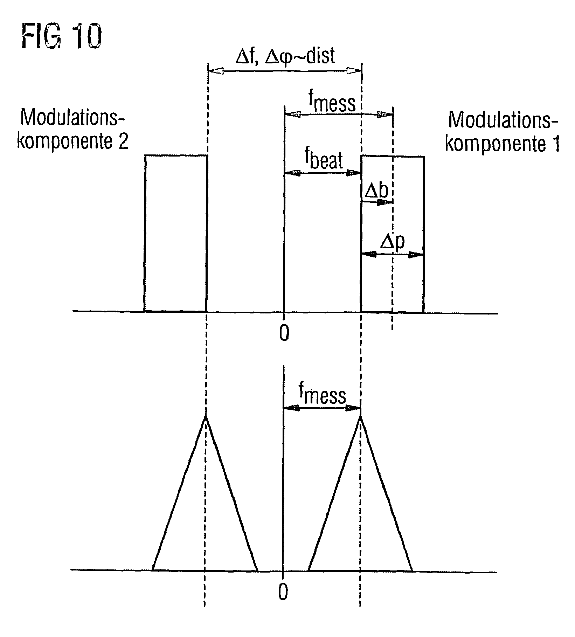

beträgt. Da die Mittenfrequenz $f_{mess}$ des Rechteckes wegen der dargestellten Frequenzverschiebung bei $f_{beat} + \Delta b = f_{beat} + 0,5 - \Delta p$ liegt, ergibt sich die günstige Eigenschaft, dass der im positiven und im negativen Frequenzbereich liegende Spektralanteil der cos-Funktion auch bei verschwindender Entfernung sich nicht überlappen. Das heißt, dass mit einem auf diesem erfindungsgemäßen Radarsystem, im Prinzip unabhängig von der Bandbreite, bis zur Entfernung 0 gemessen werden kann. Folglich besitzt dieses System nicht das Nahbereichsproblem vergleichbarer bekannter Radare mit reellwertiger Auswertung, deren prinzipielles Spektrum in Figur 10 dargestellt ist.

Unterstützt wird diese günstige Eigenschaft dadurch, dass sich als Spektral-Hüllkurve, wie in Figur 10 oben dargestellt, eine Rechteckfunktion ergibt. Folglich kann die Beat-Frequenz $f_{beat}$ und somit die Entfernung anhand des Abstandes zwischen den äußeren Kanten des linken und rechten Seitenbandes bestimmt werden.

Figur 10 dient zur allgemeinen Verdeutlichung und stellt das Frequenzspektrum der Echosignale dar, die vom Radar als Messsignale (Echosignale) empfangen werden. Die Hüllkurve aller Amplituden â der Echosignale über dem gesamten Frequenzbereich oder auch nur über einem Ausschnitt daraus wird als Echoprofil bezeichnet, welches auszuwerten ist. Es werden also Amplituden â, Phasen φ und Frequenzen f der Echosignale gemessen und in einer Recheneinheit weiterverarbeitet.

Parametriert wird das System vorzugsweise wie folgt: Die Einschaltdauer Ts wird vorzugsweise so gewählt, das sie dem halben Kehrwert der Modulationsbandbreite B entspricht also Ts = 2/B. Die Wahl der Modulationsfrequenz $f_{mk}$ richtet sich nach der gewünschten effektiven Sendeleistung. Eine geeignete praktische Parametrierung könnte wie folgt aussehen. B = 1 GHz, Ts = 2ns und $f_{mk}$ = 2 MHz.

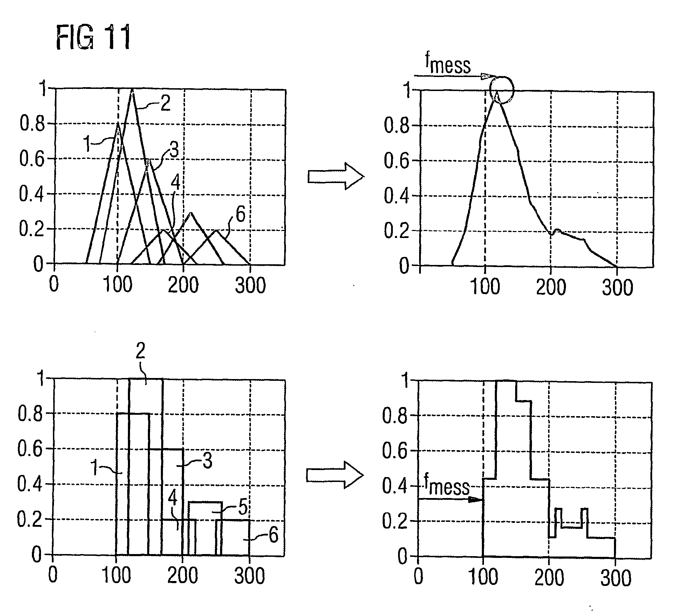

Besonders vorteilhaft kann das erfindungsgemäße System als Nahbereichsradar eingesetzt werden. Bei einem Nahbereichsradar ist die dargestellte Möglichkeit die äußere Kante der Rechteckfunktion zur Bestimmung der Beatfrequenz bzw. der Entfernung heranzuziehen insbesondere auch deswegen sehr vorteilhaft, da bei solchen Sensoren häufig die kürzeste Entfernung bzw. das am nächsten gelegene Objekt besonders interessant ist z.B., wenn der Sensor zum Zweck einer Kollisionsvermeidung verwendet wird. Die bei Systemen nach dem Stand der Technik üblichen Messgenauigkeits-Probleme, die durch Echo-Überlagerungen entstehen, treten bei dem erfindungsgemäßen System idealerweise nicht auf, wenn wie vorgeschlagen, die inneren Kanten der Rechteckfunktion zur Auswertung herangezogen werden. Die Probleme durch Überlagerung von Spektralkomponenten bei üblichen Systemen und der Vorteil des erfindungsgemäßen Systems sind in Figur 11 anschaulich dargestellt. Man sieht bei der dargestellten Überlagerung von 6 Signalkomponenten (1, 2, ..., 6), dass im normalen Fall (Figur 11 oben) der bestimmte Messwert, also das Maximum des Spektrum, nicht der tatsächlichen zur Entfernung proportionalen Frequenz (hier = 100) entspricht.

Demgegenüber liegt beim erfindungsgemäßen System (Figur 11 unten) die linke Kante auch bei Überlagerung der Signalkomponenten an der richtigen Position, d.h. es wird ein korrekter Entfernungswert bestimmt.

Um die Kanten, also insbesondere die erste innerste Kante exakt zu bestimmen, ist es vorteilhaft das Betragsspektrum zu differenzieren, da die steilen Flanken des Rechtecks dann ausgeprägte Peaks ergeben. Die Lagen der Maxima der Peaks entsprechen dann der Position der Kanten bzw. den Wendpunkten der Kantenfunktion. Durch diese Form der Auswertung wird mit einfachen Mitteln vermieden, dass die Amplitude des Signals einen Einfluss auf die Lage der bestimmten Position hat, wie dies bei einfachen Schwellenwertauswertungen der Fall wäre. Da die Messsignale und Spektren zumeist nur in zeitdiskretisierter Form vorliegen, ist es ferner vorteilhaft die Lagebestimmung der Maxima des differenzierten Spektrums mit Hilfe einer Interpolationsrechnung weiter zu verbessern. Eine günstige Interpolation kann z.B. mit einem gängigen Polynomfit erfolgen. Vorzugsweise werden hierzu einige der diskreten Spektralpunkte in der direkten Umgebung des Maximums (z.B. 3 Punkte, d.h. das Maximum und sein rechter und linker Nachbar) und ein Polynom gerader Ordnung verwendet (z.B. Ordnung 2 d.h. eine Parabel). Andere Interpolatoren wie etwa Spline-Verfahren oder solchen Verfahren die zu erwartenden Kurvenformen mittels Least-Squares-Verfahren an die gemessene Kurve anpassen sind selbstverständlich ebenso zu verwenden.

Alle genannten Verfahren können natürlich auch einzeln angewendet oder in anderen Kombinationen die erfindungsgemäßen Vorzüge entwickeln und auch mit anderen bei FMCW-Radaren bekannten Verfahren kombiniert werden.

## Patentansprüche

1.  Anordnung mit Sendemitteln zum Senden eines Signals und mit Empfangsmitteln zum Empfangen einer Reflexion des gesendeten Signals, wobei die Sendemittel einen Sendeoszillator aufweisen, dessen Versorgungsspannung ein- und ausschaltbar ist,
    **dadurch gekennzeichnet,**
    **dass** die Empfangsmittel einen Auswertungsoszillator aufweisen und dass der Sendeoszillator durch den Auswertungsoszillator und/oder der Auswertungsoszillator durch den Sendeoszillator quasiphasenkohärent über eine Kopplung anregbar sind.

2.  Anordnung nach Anspruch 1,
    **dadurch gekennzeichnet,**
    **dass** die Oszillatoren so durch Leitungsmittel miteinander verbunden sind, dass der Sendeoszillator durch den Auswertungsoszillator und/oder der Auswertungsoszillator durch den Sendeoszillator quasiphasenkohärent anregbar sind.

3.  Anordnung nach einem der vorhergehenden Ansprüche,
    **dadurch gekennzeichnet,**
    **dass** die Oszillatoren so beieinander angeordnet sind, dass der Sendeoszillator durch den Auswertungsoszillator und/oder der Auswertungsoszillator durch den Sendeoszillator quasiphasenkohärent anregbar sind.

4.  Anordnung nach einem der vorhergehenden Ansprüche,
    **dadurch gekennzeichnet,**
    **dass** die Oszillatoren so gegeneinander unabgeschirmt sind, dass der Sendeoszillator durch den Auswertungsoszillator und/oder der Auswertungsoszillator durch den Sendeoszillator quasiphasenkohärent anregbar sind.

5.  Anordnung nach einem der vorhergehenden Ansprüche,
    **dadurch gekennzeichnet,**
    **dass** die Anordnung Mittel zum zyklischen Schalten des quasiphasenkohärent anregbaren Oszillators mit einer Taktrate aufweist.

**6.** Anordnung nach Anspruch 5,
**dadurch gekennzeichnet,**
**dass** die Einschaltdauer des quasiphasenkohärent anregbaren Oszillators in der Größenordnung des Kehrwerts oder kleiner als der Kehrwert der Differenz zwischen den Frequenzen der beiden Oszillatoren im eingeschwungenen Zustand ist.

**7.** Anordnung nach Anspruch 5 oder 6,
**dadurch gekennzeichnet,**
**dass** die Wiederholrate des Taktes, mit dem der quasiphasenkohärent anregbare Oszillator geschaltet wird, deutlich größer als die Frequenz des Messsignals ist, insbesondere mehr als fünfmal so groß.

**8.** Anordnung nach einem der vorhergehenden Ansprüche,
**dadurch gekennzeichnet,**
**dass** der Sendeoszillator und/oder der Auswertungsoszillator in ihrer Frequenz veränderbar sind.

**9.** Anordnung nach einem der vorhergehenden Ansprüche,
**dadurch gekennzeichnet,**
**dass** der Sendeoszillator oder der Auswertungsoszillator in seiner Frequenz veränderbar ist, während der Auswertungsoszillator oder der Sendeoszillator ein Festfrequenzoszillator ist.

**10.** Anordnung nach einem der vorhergehenden Ansprüche,
**dadurch gekennzeichnet,**
**dass** die Anordnung eine Anordnung zur Abstandsmessung ist.

**11.** Anordnung nach einem der vorhergehenden Ansprüche,
**dadurch gekennzeichnet,**
**dass** die Anordnung ein Radar ist, insbesondere ein im Frequenzbereich durchstimmbarer Radar und/oder ein in zwei Schaltzuständen zwischen einem Nahbereichsradar und einem Fernbereichsradar umschaltbarer Radar.

**12.** Fahrzeug, Gebäude oder Industrieanlage aufweisend eine Anordnung nach einem der vorhergehenden Ansprüche.

**13.** Verfahren, insbesondere zur Abstandsmessung, bei dem

- ein Sendeoszillator durch einen Auswertungsoszillator und/oder ein Auswertungsoszillator durch einen Sendeoszillator quasiphasenkohärent über eine Kopplung angeregt wird, dessen Versorgungsspannung ein- und ausschaltbar ist,
- mit einem Sendeoszillator ein zu sendendes Signal erzeugt wird,
- das Signal gesendet wird,
- eine Reflexion des gesendeten Signals empfangen wird,
- mit dem Auswertungsoszillator ein Auswertungssignal erzeugt wird.

**14.** Verfahren nach Anspruch 13,
bei dem das Auswertungssignal mit der Reflexion des gesendeten Signals gemischt wird.

**15.** Verfahren nach Anspruch 13 oder 14,
bei dem der Sendeoszillator durch den Auswertungsoszillator und/oder der Auswertungsoszillator durch den Sendeoszillator zyklisch immer wieder quasiphasenkohärent angeregt wird.

## Claims

**1.** Arrangement with send means for sending a signal and with receive means for receiving a reflection of the sent signal where the send means feature a transmitting oscillator, whose supply voltage is switchable on and off,
**characterized in that**
the receive means feature an evaluation oscillator and that the transmitting oscillator is able to be excited by the evaluation oscillator and/or the evaluation oscillator by the transmitting oscillator via a coupling in a quasi-phase coherent manner.

**2.** Arrangement in accordance with claim 1,
**characterized in that**
the oscillators are connected to each other by line means such that the transmitting oscillator is able to be excited by the evaluation oscillator and/or the evaluation oscillator by the transmitting oscillator in a quasi-phase coherent manner.

**3.** Arrangement in accordance with one of the previous claims,
**characterized in that**
the oscillators are arranged next to each other such that the transmitting oscillator is able to be excited by the evaluation oscillator and/or the evaluation oscillator by the transmitting oscillator in a quasi-phase coherent manner.

**4.** Arrangement in accordance with one of the previous claims,
**characterized in that**
the oscillators are unshielded in relation to each other such that the transmitting oscillator is able to be excited by the evaluation oscillator and/or the evaluation oscillator by the transmitting oscillator in a quasi-phase coherent manner.

**5.** Arrangement in accordance with one of the previous claims,
**characterized in that**
the arrangement features means for with a clock rate cyclically switching the oscillator which can be excited in a quasi-phase coherent manner.

**6.** Arrangement in accordance with claim 5,
**characterized in that**
the on time of the oscillator which can be excited in a quasi-phase coherent manner is of the order of magnitude of the reciprocal value or smaller than the reciprocal value of the difference between the frequencies of the two oscillators in the steady state.

**7.** Arrangement in accordance with claim 5 or 6,
**characterized in that**
the repeat rate of the clock with which the oscillator which can be excited in a quasi-phase coherent manner is switched is significantly greater than the frequency of the measurement signal, especially more than five times as great.

**8.** Arrangement in accordance with one of the previous claims,
**characterized in that**
the frequency of the transmitting oscillator and/or the evaluation oscillator can be changed.

**9.** Arrangement in accordance with one of the previous claims,
**characterized in that**
the frequency of the transmitting oscillator or the evaluation oscillator can be changed while the evaluation oscillator or the transmitting oscillator is a fixed frequency oscillator.

**10.** Arrangement in accordance with one of the previous claims,
**characterized in that**,
the arrangement is an arrangement for distance measurement.

**11.** Arrangement in accordance with one of the previous claims,
**characterized in that**
the arrangement is a radar, especially a radar of which the frequency range can be tuned and/or a radar switchable into two switching states between a short-range radar and a long-range radar.

**12.** Motor vehicle, building or industrial plant featuring an arrangement in accordance with one of the previous claims.

**13.** Method, especially for distance measurement, in which

- a transmitting oscillator is excited by an evaluation oscillator and/or an evaluation oscillator by a transmitting oscillator via a coupling in a quasi-phase coherent manner, the supply voltage of the transmitting oscillator is switchable on and off,
- a signal to be sent is created by a transmitting oscillator,
- the signal is sent,
- a reflection of the sent signal is received,
- an evaluation signal is created by the evaluation oscillator.

**14.** Method according to Claim 13,
in which the evaluation signal is mixed with the reflection of the sent signal.

**15.** Method in accordance with claim 13 or 14,
in which the transmitting oscillator is repeatedly excited in a quasi-phase coherent manner by the evaluation oscillator and/or the evaluation oscillator by the transmitting oscillator.

**Revendications**

**1.** Dispositif à moyens émetteurs pour l'émission d'un signal et à moyens récepteurs pour la réception d'une réflexion du signal émis, les moyens émetteurs comportant un oscillateur d'émission dont la tension d'alimentation est connectable et déconnectable,
**caractérisé en ce que**
les moyens récepteurs comportent un oscillateur d'analyse, et **en ce que** l'oscillateur d'émission et/ou l'oscillateur d'analyse sont excitables via un couplage en quasi-cohérence de phase, respectivement par l'oscillateur d'analyse et par l'oscillateur d'émission.

**2.** Dispositif selon la revendication 1,
**caractérisé en ce que**
les oscillateurs sont reliés entre eux par des moyens de conduction de manière à rendre excitables en quasi-cohérence de phase l'oscillateur d'émission par l'oscillateur d'analyse et/ou l'oscillateur d'analyse par l'oscillateur d'émission.

**3.** Dispositif selon l'une des revendications précédentes,
**caractérisé en ce que**
les oscillateurs sont disposés l'un près de l'autre de manière à rendre excitables en quasi-cohérence de phase l'oscillateur d'émission par l'oscillateur d'analyse et/ou l'oscillateur d'analyse par l'oscillateur d'émission.

**4.** Dispositif selon l'une des revendications précédentes,
**caractérisé en ce que**
les oscillateurs sont non blindés entre eux, de manière à rendre excitables en quasi-cohérence de phase l'oscillateur d'émission par l'oscillateur d'analyse et/ou l'oscillateur d'analyse par l'oscillateur d'émission.

**5.** Dispositif selon l'une des revendications précédentes,
**caractérisé en ce que**
le dispositif comprend des moyens pour l'activation cyclique suivant une période élémentaire de l'oscillateur excitable en quasi-cohérence de phase.

**6.** Dispositif selon la revendication 5,
**caractérisé en ce que**
la durée de connexion de l'oscillateur excitable en quasi-cohérence de phase est de l'ordre de grandeur de l'inverse, ou inférieure à l'inverse de la différence entre les fréquences des deux oscillateurs en régime permanent.

**7.** Dispositif selon la revendication 5 ou 6,
**caractérisé en ce que**
la fréquence de répétition du cycle suivant laquelle l'oscillateur excitable en quasi-cohérence de phase est activé, est sensiblement supérieure à la fréquence du signal de mesure, notamment plus de cinq fois supérieure à celle-ci.

**8.** Dispositif selon l'une des revendications précédentes,
**caractérisé en ce que**
la fréquence de l'oscillateur d'émission et/ou l'oscillateur d'analyse est variable.

**9.** Dispositif selon l'une des revendications précédentes,
**caractérisé en ce que**
l'oscillateur d'émission ou l'oscillateur d'analyse est à fréquence variable, tandis que l'oscillateur d'analyse ou l'oscillateur d'émission est un oscillateur à fréquence fixe.

**10.** Dispositif selon l'une des revendications précédentes,
**caractérisé en ce que**
le dispositif est un dispositif pour la mesure de distance.

**11.** Dispositif selon l'une des revendications précédentes,
**caractérisé en ce que**
le dispositif est un radar, en particulier un radar à plage de fréquences variable et/ou un radar commutable suivant deux régimes d'activation, entre un radar pour courtes distances et un radar à zone d'action lointaine.

**12.** Véhicule, immeuble ou installation industrielle comportant un dispositif selon l'une des revendications précédentes.

**13.** Procédé, en particulier pour la mesure de distance, dans lequel

- un oscillateur d'émission et/ou un oscillateur d'analyse sont excitables via un couplage en quasi-cohérence de phase, respectivement par un oscillateur d'analyse et par un oscillateur d'émission, dont la tension d'alimentation est connectable et déconnectable,
- un signal à émettre est généré par un oscillateur d'émission,
- le signal est émis,
- une réflexion du signal émis est reçue,
- un signal d'analyse est généré par l'oscillateur d'analyse.

**14.** Procédé selon la revendication 13,
dans lequel le signal d'analyse est mixé avec la réflexion du signal émis.

**15.** Procédé selon la revendication 13 ou 14,
où l'oscillateur d'émission est cycliquement ré-excité en quasi-cohérence de phase par l'oscillateur d'analyse, et/ou l'oscillateur d'analyse par l'oscillateur d'émission.

## FIG 1

## FIG 2

FIG 3

FIG 4

## FIG 5

FIG 6

## FIG 7

## FIG 8

## FIG 9

FIG 10

$\Delta f, \Delta\varphi\sim dist$

$f_{mess}$

Modulationskomponente 2

$f_{beat}$

Modulationskomponente 1

$\Delta b$

$\Delta p$

0

$f_{mess}$

0

# FIG 11

## FIG 12

UMSET

MIX3     BPF

HFO     CLK

MIX3     BPF

MIX3     BPF

CLK1     HFO     HFO

CLK2

MIX3     BPF

## FIG 13

CLK1

CLK1

CLK1

LO

VCO1

VCO

VCO2

t

CLK2

CLK2

CLK2

PLL

PLL

t